# EUROPEAN PATENT APPLICATION

(11) **EP 1 460 532 A2**
(43) Date of publication of application: **22.09.2004**
(21) Application number: 04251079.2
(22) Date of filing: 26.02.2004
(51) Int. Cl.: G06F 9/38

(54) **Computer processor data fetch unit and related method**

(30) Priority: 20.03.2003 US 393890
(71) Applicant: Sun Microsystems, Inc., Santa Clara, California 95054 (US)
(72) Inventor: Poggio, Andrew A., Palo Alto, CA 94306 (US)
(74) Representative: Gill, David Alan

(57) **Abstract**

The invention provides for the prefetching of information, such as instructions and operands, in advance of a processor needing the information. In one arrangement, a prefetch unit receives the same instruction stream as the processor but the prefetch unit is run at a faster clock speed than the processor allowing the prefetch unit to run ahead of the processor in the instruction stream and to prefetch information in advance of the processor needing the information. Also, the prefetch unit can request instructions and operands from a first level (L1) cache and the L1 cache can send the requested instructions and operands to the prefetch unit and automatically stores the requested instructions and operands until needed by the processor. By prefetching information, the prefetch unit improves processor performance by reducing the number of cache misses and by reducing memory latency.

## Description

The present invention is directed to the field of microelectronics, and more particularly, to microprocessors.

Essentially all computer architectures today utilize a memory and a processor. The memory stores information, such as instructions and data, for use by the processor. The instructions direct the processor in data manipulation, and the data are acted on by the processor in accordance with the instructions.

Processors today are typically designed in a pipelined architecture. In a pipelined architecture, generally, the processor processes an instruction in different stages. This enables the processor to process more than one instruction simultaneously, one at each of several stages.

Broadly viewed, prior art processors receive an instruction stream, such as from a software program, and processed the instruction stream through four different stages: 1) retrieve, also termed fetch, an instruction from memory; 2) decode the instruction and retrieve the operands needed for the instruction from memory; 3) execute the instruction on the operands to obtain a result; and 4) take the result and store it in memory. In prior art computer architectures, these stages were implemented at the same clock speed.

In order to execute program instructions quickly, a computer's processor must have instructions and operands from memory available at the processor at the time they are needed in the instruction stream. New processors are continually being designed that execute instructions at increasingly faster rates, however the time to access data in memory, also termed memory latency, is not decreasing at a similar rate. As a result, processors often have to wait for memory accesses to complete operations. This considerably reduces the overall performance of the processor and prevents systems using the processor from taking full advantage of the increased processor speeds.

To mitigate this speed differential, designers typically utilize one or more caches additional to the main memory of a computer system. Caches are small, fast memories that are located physically closer to the processor than the main memory. A first level cache, also called an L1 cache, is a small, fast memory, typically, co-located with the processor on the same semiconductor chip for fast access speed. Higher level caches, such as L2, L3, etc., are also often used in the computer systems, but are typically located farther from the processor than the L1 cache. Caches partially solve the memory latency problem as they can more closely match processor speeds; however, caches are typically too small to hold very much data, and are therefore limited in their ability to solve the memory latency problem.

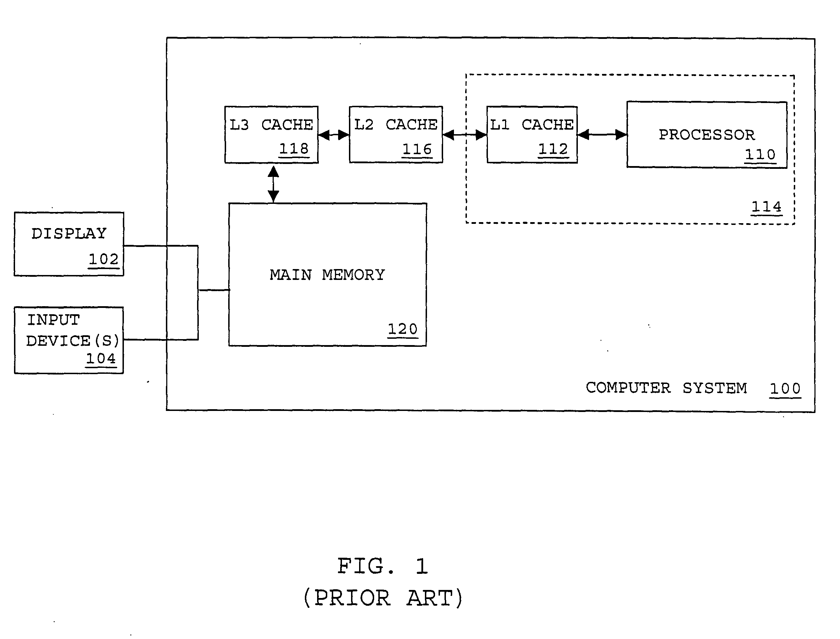

FIG. 1 illustrates a block diagram of a computer system 100 including a processor 110. As illustrated, computer system 100 includes processor 110, an L1 cache 112, an L2 cache 116, an L3 cache 118, and a main memory 120. Computer system 100 is further connected to a display 102 for displaying information on computer system 100 and one or more input device(s) 104 for inputting information into computer system 100. As illustrated, L1 cache 112 is co-located on the same semiconductor chip 114 as processor 110, with L2 cache 116 and L3 cache 118 existing off semiconductor chip 114 of processor 110, and a main memory 120 located elsewhere in the computer system.

Generally, in the prior art, instructions flowed from main memory 120 to L3 cache 118, to L2 cache 116, to L1 cache 112, and then to processor 110. Processor 110 then advanced the instructions through the pipelined processor stages (not shown) earlier described. In the prior art, processor 110 fetched an instruction from L1 cache 112, decoded the instruction and determined the needed operands, executed the instruction, and then stored the result in L1 cache. If the instruction and/or operands were not in L1 cache 112, termed a cache miss, processor 110 would wait while the instruction and/or operand was retrieved from L2 cache 116, L3 cache 118, or main memory 120. Due to the small size of L1 cache 112, cache misses could be frequent.

A disadvantage of this prior art approach was that processor 110 could only get information quickly and efficiently from L1 cache 112. If the information was in a higher level cache, e.g., L2 cache 116 or L3 cache 118, or main memory 120, the processor had to wait to receive the information, and the processor typically did nothing while it waited. Thus, prior art processors spent most of their time waiting for information to be retrieved from caches or memory so the processor could act on the information. This was inefficient and expensive in terms of lost processor productivity.

The invention seeks to provide for a computer processor unit having advantages over known such units.

According to one aspect of the present invention, there is provided a device fetching information for a computer processor having a first clock speed and that includes: a first level cache interface; an instruction decoder coupled with the first level cache interface; a program counter coupled with the instruction decoder and the first level cache interface; an arithmetic logic unit coupled with the instruction decoder; and a branch prediction logic unit coupled with the instruction decoder, wherein the device operates at a second clock speed, the second clock speed being faster than the first clock speed.

Advantageously, information, such as instructions and operands, is prefetched in advance of a processor needing it. In one embodiment, a prefetch unit receives the same instruction stream as a processor. The prefetch unit is run at a faster clock speed than the processor allowing the prefetch unit to run ahead of the processor in the instruction stream and to prefetch information for the processor.

The prefetch unit advantageously requests instructions and operands from a first level (L1) cache. The L1 cache sends the requested instructions and operands to the prefetch unit and automatically stores the requested instructions and operands until needed by the processor. By prefetching the information, the prefetch unit improves processor performance by reducing the number of cache misses and by reducing memory latency.

According to another aspect, a fetch unit includes: a first level cache interface, the first level cache interface for receiving instructions and operands from a first level cache, and for sending requests for instructions and operands to the first level cache; an instruction decoder coupled with the first level cache interface, the instruction decoder for decoding at least one instruction and for determining any operands needed by the at least one instruction; a program counter coupled with the first level cache interface and the instruction decoder, the program counter for storing a location of the at least one instruction; an arithmetic logic unit coupled with the instruction decoder, the arithmetic logic unit for calculating addresses and other mathematical operations; and a branch prediction logic unit coupled with the instruction decoder, the branch execution logic unit for selecting an instruction branch of a conditional branch instruction.

Yet further, a device can be provided for fetching information for a computer processor having a first clock speed that includes: a first level cache interface for requesting and receiving instructions and operands from a first level cache; an instruction decoder coupled with the first level cache interface, the instruction decoder for decoding a received instruction and for determining whether or not one or more operands are required by the instruction; a program counter coupled with the first level cache interface and the instruction decoder, the program counter for storing a location of the received instruction; an arithmetic logic unit coupled with the instruction decoder, the arithmetic logic unit for calculating addresses of instructions and operands and other mathematical operations; and a branch prediction logic unit coupled with the instruction decoder, the branch prediction logic unit for selecting an instruction branch of a conditional branch instruction, wherein the device operates at a second clock speed, the second clock speed being faster than the first clock speed.

In another embodiment, a device for fetching information for a computer processor having a first clock speed includes: means for requesting an instruction from a first level cache; means for receiving the instruction from the first level cache; means for decoding the instruction; means for determining whether or not one or more operands are required by the instruction; means for requesting the one or more operands from the first level cache if one or more operands are required by the instruction; means for receiving the one or more operands, if any, from the first level cache; and means for calculating a next instruction.

According to still a further embodiment, a computer system includes: a processor, the processor operating at a first clock speed; a fetch unit coupled with the processor, the prefetch unit operating at a second clock speed, the second clock speed being faster than the first clock speed; a first level cache coupled with the processor and the prefetch unit; and a main memory communicatively coupled with the first level cache.

In another aspect the invention provides for a method for prefetching information for a computer processor having a first clock speed and which includes: requesting an instruction from a first level cache; receiving the instruction from the first level cache; decoding the instruction; determining whether or not one or more operands are required by the instruction; if one or more operands are required by the instruction, requesting the one or more operands from the first level cache; receiving the one or more operands from the first level cache; and calculating a next instruction.

A method for fetching information for a computer processor having a first clock speed can also be provided and which includes: requesting an instruction from a first level cache, the first level cache automatically storing the instruction; receiving the instruction from the first level cache; decoding the instruction; determining whether or not one or more operands are required by the instruction; if one or more operands are required by the instruction, requesting the one or more operands from the first level cache, the first level cache automatically storing the one or more operands; receiving the one or more operands, if any, from the first level cache; and calculating a next instruction, wherein the method is performed at a second clock speed, the second clock speed being faster than the first clock speed.

By prefetching information the fetch unit serves as a prefetch unit which improves processor performance by reducing the number of cache misses and by reducing memory latency.

It is to be understood that both the foregoing general description and following detailed description are intended only to exemplify and explain the invention as claimed.

The invention is described further hereinafter by way of example only with reference to the accompanying drawings in which:
FIG. 1 illustrates a block diagram of a computer system including a processor;
FIG. 2 illustrates a block diagram of a computer system including a prefetch unit according to an embodiment of the present invention;
FIG. 3 illustrates a block diagram of the prefetch unit of FIG. 2 according to an embodiment of the present invention; and
FIG. 4 illustrates a process flow diagram of a method for prefetching instructions and data for a processor according to an embodiment of the present invention.

In the drawings the same reference numbers may be used throughout the following description to refer to the same or like parts.

The present invention provides for methods and devices that prefetch information, such as instructions and data, in advance of the processor needing them. Broadly viewed, the present invention takes the first stage of the prior art pipelined architecture, e.g., retrieve an instruction, separates this stage from the other processor stages, and runs it at a faster clock speed than the other stages implemented by the processor.

In one embodiment, the present invention is implemented as a prefetch unit on the same semiconductor chip as the processor. The prefetch unit receives the same instruction stream as the processor, and, due to the faster clock speed, is able to run ahead of the processor in the instruction stream to prefetch information in advance of the processor needing the information. In one embodiment, the prefetch unit requests instructions and operands from a first level (L1) cache. The L1 cache sends the requested instructions and operands to the prefetch unit and automatically stores the requested instructions and operands until needed by the processor.

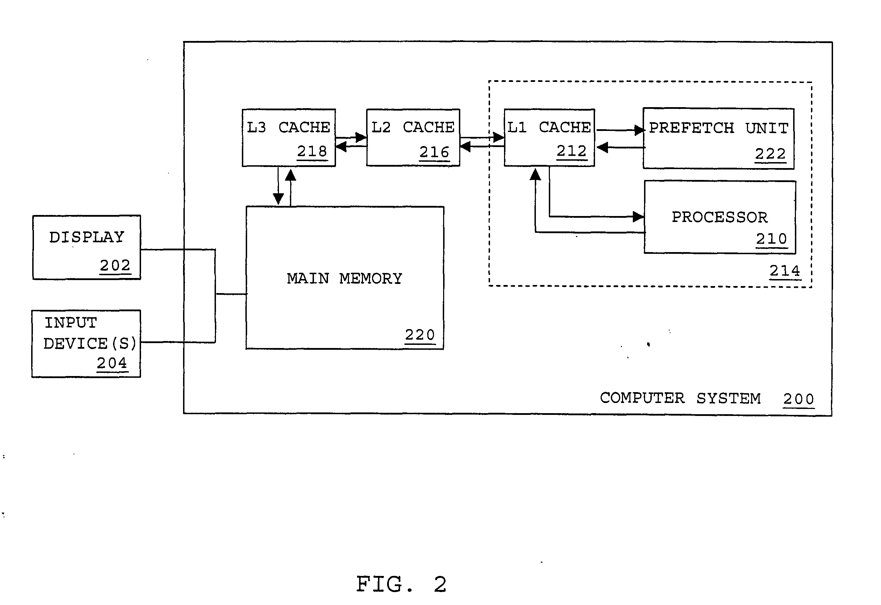

FIG. 2 illustrates a block diagram of a computer system 200 including a prefetch unit 222 according to one embodiment of the present invention. Computer system 200 further includes: a processor 210, an L1 cache 212, two higher level caches -- an L2 cache 216 and an L3 cache 218, and a main memory 220. Computer system 200 is illustrated as further including a display 202 and one or more input device(s) 204. It is understood by those of skill in the art that in other embodiments, computer system 200 can be differently configured and that the present illustration is for exemplary purposes only to aid in describing the present invention. In particular, the presence of display 202, input device(s) 204, L2 cache 216, and L3 cache 218 are not required.

In FIG. 2, in one embodiment, prefetch unit 222 is co-located on the same semiconductor chip 214 with processor 210 and L1 cache 212. In other embodiments, prefetch unit 222 is co-located on the same semiconductor chip 214 with processor 210. Although prefetch unit 222 is illustrated physically separate from the processor 210, logically it operates as part of processor 210. In one embodiment, prefetch unit 222 operates, or runs, at a faster clock speed than processor 210. A clock input (not shown) can be externally supplied to prefetch unit 222 or internally generated by prefetch unit 222.

In the present illustration, the instruction stream of computer system 200 flows from main memory 220 to L3 cache 218, to L2 cache 216, and to L1 cache 212. From L1 cache 212, the instruction stream is sent to both prefetch unit 222 and processor 210. Prefetch unit 222 requests an instruction or operand from L1 cache 212, e.g., the address of an instruction or operand. If L1 cache 212 does not have the requested instruction or operand, L1 cache 212 obtains the requested instruction or operand from L2 cache 216, L3 cache 218, or main memory 220 in advance of processor 210 needing the instruction or operand.

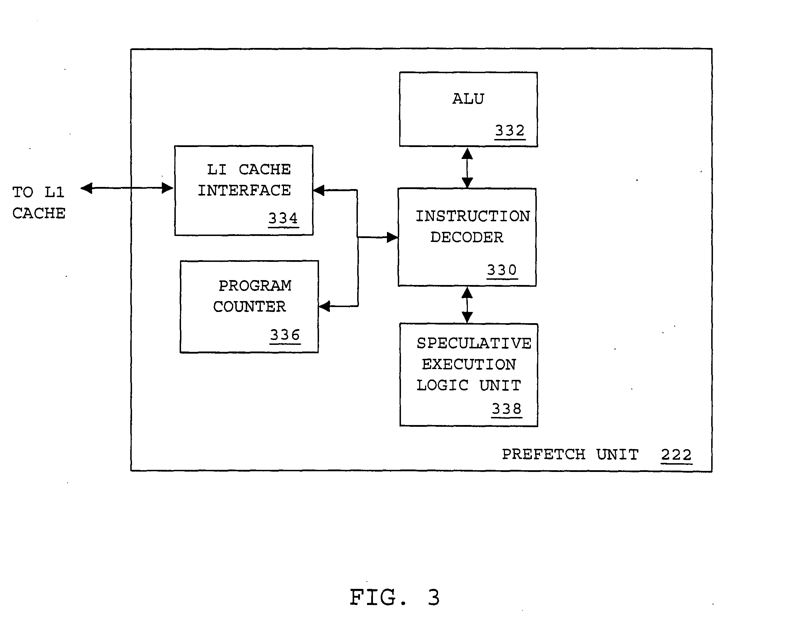

FIG. 3 illustrates a block diagram of prefetch unit 222 of FIG. 2 according to one embodiment of the present invention. As illustrated in FIG. 3, in one embodiment, prefetch unit 222 includes: 1) a first level (L1) cache interface 334; 2) an instruction decoder 330; 3) a program counter 336; 4) an arithmetic logic unit (ALU) 332; and 5) a branch prediction logic unit 338.

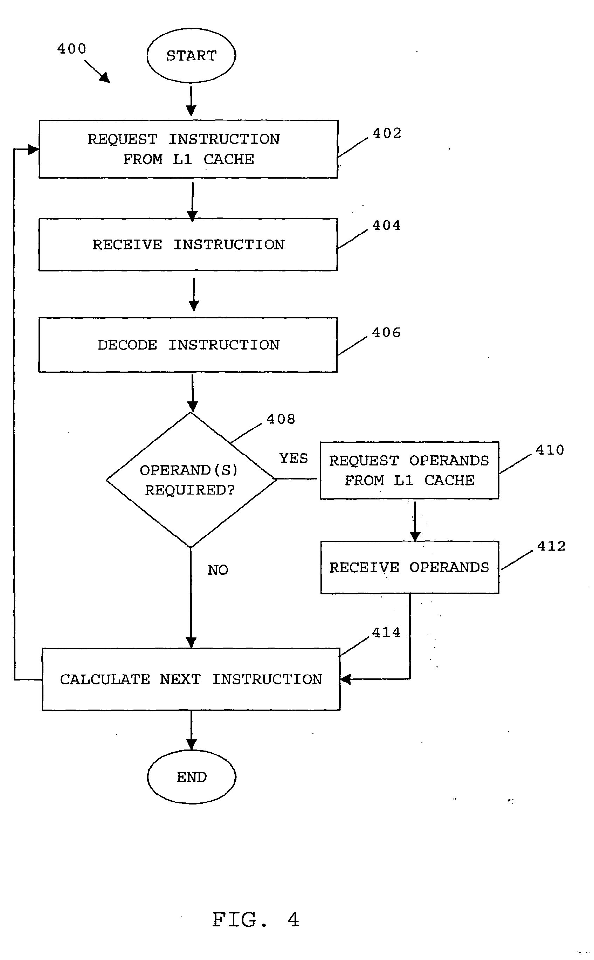

L1 cache interface 334 is utilized for sending requests for instructions and operands to L1 cache 212 (FIG. 2) and for receiving instructions and operands from L1 cache 212 (FIG. 2), such as instructions in an instruction stream, or requested instructions and operands. Instruction decoder 330 is utilized for decoding the instruction and for determining any operands needed by the instruction. Program counter 336 is utilized to keep track of where prefetch unit 222 is in the instruction stream and stores the current location. ALU 332 is utilized for calculating addresses and other mathematical operations. Branch prediction logic unit 338 is utilized for selecting an instruction branch of a conditional branch instruction. Prefetch unit 222 is further described herein with reference to FIG. 4.

FIG. 4 is a process flow diagram of a process 400 implemented by prefetch unit 222 for prefetching information for use by processor 210 of FIG. 2 according to one embodiment of the present invention. Process 400 is automatically implemented by prefetch unit 222. Referring now to FIGS. 2, 3 and 4, together, according to process 400, in one embodiment, at operation 402, when a new program starts, prefetch unit 222 requests a first instruction from L1 cache 212. This request is made through L1 cache interface 334. If the instruction is stored in L1 cache 212, L1 cache 212 sends the requested instruction to prefetch unit 222 via L1 cache interface 334.

If L1 cache 212 does not have the instruction, L1 cache 212 obtains the instruction from a higher level cache, such as L2 cache 216 or L3 cache 218, or from main memory 220. When L1 cache 212 obtains the requested instruction, L1 cache 212 automatically stores the instruction and sends the requested instruction to prefetch unit 222 via L1 cache interface 334.

At operation 404, prefetch unit 222 receives the requested instruction from L1 cache 212 via L1 cache interface 334. Instruction decoder 330 of prefetch unit 222 receives the requested instruction from L1 cache interface 334, and program counter 336 stores the current location of the instruction.

At operation 406, upon receipt of the instruction, instruction decoder 330 decodes the instruction. Generally, instruction decoder 330 receives a bit pattern and determines what type of instruction has been received. Instruction decoding is well known to those of skill in the art and not further described herein. At operation 408, instruction decoder 330 of prefetch unit 222 determines if the instruction requires operands. Instruction decoder 330 determines from the bit pattern what operands are required for the instruction (if any). This operation can also involve ALU 332, if mathematical operations are required.

If the instruction requires operands, at operation 410, prefetch unit 222 requests the operands from L1 cache 212 via L1 cache interface 334. If L1 cache 212 does not have the operands, L1 cache 212 retrieves the operands from a higher level cache, such as L2 cache 216 or L3 cache 218, or from main memory 220. The retrieved operands are automatically stored in L1 cache 212 and sent to prefetch unit 222. Prefetch unit 222 may or may not act on the operands dependent upon whether or not the operands are needed by prefetch unit 222, such as for address calculation or branch prediction.

At operation 416, prefetch unit 222 calculates a next instruction to be fetched and returns to operation 402. Prefetch unit 222 holds the address of the current instruction in program counter 336, so calculation of the next address is made from the current instruction address held in program counter 336. The next instruction may be the next instruction in the instruction stream, or it may be an instruction in a different instruction branch. Execution of different instruction branches by prefetch unit 222 is further described herein with reference to a conditional branch instruction.

Frequently processors receive a set of instructions that contains one or more conditional branch instructions. A conditional branch instruction is a program instruction that directs the computer system, e.g., computer system 200, to jump to another location in the program if a specified condition is met. This other location in the program is termed a conditional instruction branch or, simply, an instruction branch.

As prefetch unit 222 runs ahead of processor 210 in the instruction stream (due to the faster clock speed), prefetch unit 222 may not have the information necessary to determine which instruction branch to choose. For example, at operation 416, prefetch unit 222 may not have the information necessary to calculate whether the condition is met as the needed information is a variable number or a calculated number supplied from another operation or component of computer system 200. Thus, prefetch unit 222 needs some technique for choosing an instruction branch. In one embodiment, prefetch unit 222 utilizes a process termed branch prediction to select an instruction branch and execute the instructions in the selected instruction branch.

Prior art processors typically implemented a process termed speculative execution when a conditional branch instruction was received in the instruction stream. The processor speculated which instruction branch might be the correct branch to execute next and started retrieving the instructions from that instruction branch. The next stage in the processor then began retrieving the operands for that instruction, and the following stage in the processor then began operating on the operands in accordance with the instruction. Soon the processor was taking actions and changing data, and the processor might still not have had determinative information as to whether the instruction branch was the correct selection or not.

If the selection was correct, there were, typically, no disadvantages to the selection by the processor. However, if the selection was incorrect, the processor had to undo the actions taken under the incorrect speculation and then execute the correct instruction branch. Undo processes were complex processes and costly in terms of lost processing time.

When prefetch unit 222 receives a conditional branch instruction, prefetch unit 222 may not have the information necessary to determine if the condition is met. Consequently, in one embodiment, branch prediction logic unit 338 of prefetch unit 222 utilizes branch prediction to select an instruction branch. Branch prediction is well known to those of skill in the art and not further described herein.

If prefetch unit 222 selects the correct instruction branch, there are no disadvantages to having made the selection. However, if the selection is incorrect, prefetch unit 222 simply throws out the wrong instructions. As prefetch unit 222 is receiving the instruction stream in advance of processor 210 and prefetching the instructions and operands at a faster rate than processor 210, selecting the wrong instruction branch by prefetch unit 222 merely increases the cache miss probability. Consequently, the present invention reduces costly undo processes of speculative execution by processors in the prior art and marks a significant improvement over the prior art.

In instances where a cache miss causes prefetch unit 222 to stall, once prefetch unit 222 resumes operation, prefetch unit 222 can catch up to where processor 210 is in the instruction stream because, according to the invention, prefetch unit 222 is clocked faster to retrieve instructions and operands at a faster rate than processor 210. Thus, cache misses by prefetch unit 222 can cause prefetch unit 222 to stall, but most likely not processor 210. Consequently, it is very inexpensive in terms of processing time for prefetch unit 222 to engage in branch prediction rather than have processor 210 engage in speculative execution, because unlike a processor, prefetch unit 222 does not have to undo an incorrect branch prediction and stalls due to cache misses occur at prefetch unit 222 rather than processor 210.

Unlike conditional branch instructions which can occur in an instruction stream that is being input to prefetch unit 222, processor interrupts are unpredictable. Further, they have to be attended to right away and not delayed. While interrupts happen frequently, processors typically don't spend much of their total time attending to interrupts. When a processor receives an interrupt during a program that is being currently executed, the processor jumps to a separate set of instructions associated with the interrupt. When the processor is done executing the instructions associated with the interrupt, the processor returns to the program it was executing prior to the interrupt.

When an interrupt occurs in computer system 200, prefetch unit 222 can't prefetch interrupt code from the instruction stream in advance of processor 210, because the interrupt, and, therefore, what code to execute, is unpredictable. Thus, in one embodiment, during an interrupt, prefetch unit 222 stops operating in advance of processor 210 and enters a pause mode during the interrupt. In pause mode, prefetch unit 222 retrieves the next instruction for processor 210, but doesn't retrieve the subsequent instructions far in advance of processor 210 receiving them. When the interrupt code is complete, prefetch unit 222 resumes operation, e.g., exits pause mode.

In order for prefetch unit 222 to run efficiently, prefetch unit 222 calculates the addresses of data it may need. Address calculations are typically simple, but in some instances, are quite complex, too complex for prefetch unit 222. For example, array address calculations often require index calculations that can be complex, such as in the case of hashing algorithms. Thus, in designing different embodiments of the present invention, some tradeoff in the design of prefetch unit 222 can be made between speed and the ability to calculate more complex data -- a simple prefetch unit that runs faster but can't handle very complex calculations, or a more complex prefetch unit that runs slower but can handle more complex calculations.

By limiting prefetch unit 222 functions to operations that are relatively simple, and not complex, prefetch unit 222 can be designed to run very fast, for example, in one embodiment, 2-10 times faster than the processor speed of processor 210. In embodiments in which functions of prefetch unit 222 are limited, prefetch unit 222 retrieves instructions and operands, but doesn't operate on them extensively. The operations prefetch unit 222 does perform in these embodiments, such as calculating addresses, are simple and fast allowing prefetch unit 222 to retrieve instructions and data far in advance of processor 210 needing the information.

In instances where prefetch unit 222 can't act, such as when address calculations are too complex, in one embodiment, prefetch unit 222 enters the pause mode. In these instances, processor 210 performs the complex calculations, and prefetch unit 222 fetches instructions and operands when they are needed. When the complex calculations are complete, prefetch unit 222 resumes operation, e.g., exits pause mode.

As shown above, according to the present invention, and unlike the prior art, the methods and devices of the present invention prefetch information, such as instructions and operands, in advance of a processor, so that the needed instructions and operands are present in L1 cache when the processor needs the instructions and operands. The present invention separates the prior art processor stage of retrieving an instruction (or operand), from the other processor stages, and runs it at a faster clock speed than that of the processor. By prefetching information, the prefetch unit improves processor performance by reducing the number of cache misses and by reducing memory latency.

Additionally, branch prediction of conditional branch instructions is performed without the need to undo incorrect instruction branch selections as seen in with speculative execution by prior art processors further improving processor performance.

The foregoing description of an implementation of the invention has been presented for purposes of illustration and description only, and therefore is not exhaustive and does not limit the invention to the precise form disclosed. Modifications and variations are possible in light of the above teachings or can be acquired from practicing the invention.

Consequently, the scope of protection is not limited to the specific embodiments which are shown for illustrative purposes.

## Claims

1. A device for fetching information for a computer processor, the computer processor having a first clock speed, the device comprising:
a first level cache interface;
an instruction decoder coupled with the first level cache interface;
a program counter coupled with the instruction decoder and the first level cache interface;
an arithmetic logic unit coupled with the instruction decoder; and
a branch prediction logic unit coupled with the instruction decoder,
wherein the device is arranged to operate at a second clock speed, the second clock speed being faster than the first clock speed.

2. The device of Claim 1, wherein the device and the computer processor are co-located on a same semiconductor chip.

3. A fetch unit comprising:
a first level cache interface arranged for receiving instructions and operands from a first level cache and for sending requests for instructions and operands to the first level cache;
an instruction decoder coupled with the first level cache interface and arranged for decoding at least one instruction and for determining any operands needed by the at least one instruction;
a program counter coupled with the first level cache interface and the instruction decoder, and arranged for storing a location of the at least one instruction;
an arithmetic logic unit coupled with the instruction decoder and arranged for calculating addresses and other mathematical operations; and
a branch prediction logic unit coupled with the instruction decoder and arranged for selecting an instruction branch of a conditional branch instruction.

4. The unit of Claim 3, and arranged to prefetch the instruction and operands for a computer processor arranged to operate at a first clock speed, the unit being arranged to operate at a second clock speed, which is faster than the first clock speed.

5. A device for fetching information for a computer processor arranged to operate in accordance with a first clock speed, the device comprising:
a first level cache interface for requesting and receiving instructions and operands from a first level cache;
an instruction decoder coupled with the first level cache interface, and arranged for decoding a received instruction and for determining whether or not one or more operands are required by the instruction;
a program counter coupled with the first level cache interface and the instruction decoder, and arranged for storing a location of the received instruction;
an arithmetic logic unit coupled with the instruction decoder, and arranged for calculating addresses of instructions and operands and other mathematical operations; and
a branch prediction logic unit coupled with the instruction decoder, and arranged for selecting an instruction branch of a conditional branch instruction,
wherein the device is arranged to operate at a second clock speed, the second clock speed being faster than the first clock speed.

6. The device of Claim 5, and arranged such that if the received instruction is a conditional branch instruction, the branch prediction logic unit selects an instruction branch of the conditional branch instruction using branch prediction.

7. A device for fetching information for a computer processor having a first clock speed, the device comprising:
means for requesting an instruction from a first level cache;
means for receiving the instruction from the first level cache;
means for decoding the instruction;
means for determining whether or not one or more operands are required by the instruction;
means for requesting the one or more operands from the first level cache if one or more operands are required by the instruction;
means for receiving the one or more operands, if any, from the first level cache; and
means for calculating a next instruction.

8. The device of Claim 7, wherein the device operates at a second clock speed, the second clock speed being faster than the first clock speed.

9. The device of Claim 7 or 8, wherein means are provided for selecting an instruction branch of a conditional branch instruction using branch prediction if the instruction is a conditional branch instruction.

10. A computer system comprising:
a processor arranged to operate at a first clock speed;
a fetch unit coupled with the processor and arranged to operate at a second clock speed, the second clock speed being faster than the first clock speed;
a first level cache coupled with the processor and the fetch unit; and
a main memory communicatively coupled with the first level cache.

11. A computer system of Claim 10, wherein the fetch unit further comprises:
a first level cache interface;
an instruction decoder coupled with the first level cache interface;
a program counter coupled with the instruction decoder and the first level cache interface;
an arithmetic logic unit coupled with the instruction decoder; and
a branch prediction logic unit coupled with the instruction decoder.

12. A computer system of Claim 10 or 11, and further comprising:
one or more higher level caches.

13. A computer system of Claim 10, 11 or 12 and wherein the fetch unit is external to the processor.

14. A computer system of Claim 10, 11 or 12, wherein the fetch unit is internal to the processor.

15. A computer system of Claim 10, 11, 12, 13 or 14, wherein the fetch unit and the processor are co-located on the same semiconductor chip.

16. A method for fetching information for a computer processor having a first clock speed, the method comprising:
requesting an instruction from a first level cache;
receiving the instruction from the first level cache;
decoding the instruction;
determining whether or not one or more operands are required by the instruction;
if one or more operands are required by the instruction, requesting the one or more operands from the first level cache;
receiving the one or more operands from the first level cache; and
calculating a next instruction.

17. The method of Claim 16, wherein the method is performed at a second clock speed, the second clock speed being faster than the first clock speed.

18. The method of Claim 16 or 17, wherein the instruction and the one or more operands, if any, are automatically stored in the first level cache.

19. The method of Claim 16, 17 or 18, further comprising:
if the instruction is a conditional branch instruction, selecting an instruction branch of the conditional branch instruction using branch prediction.

20. A method for fetching information for a computer processor having a first clock speed, the method comprising:
requesting an instruction from a first level cache, the first level cache automatically storing the instruction;
receiving the instruction from the first level cache;
decoding the instruction;
determining whether or not one or more operands are required by the instruction;
if one or more operands are required by the instruction, requesting the one or more operands from the first level cache, the first level cache automatically storing the one or more operands;
receiving the one or more operands, if any, from the first level cache; and
calculating a next instruction,
wherein the method is performed at a second clock speed, the second clock speed being faster than the first clock speed.
